(19) Europäisches Patentamt
European Patent Office
Office européen des brevets

(11) **EP 0 574 604 B1**

(12) **EUROPÄISCHE PATENTSCHRIFT**

(45) Veröffentlichungstag und Bekanntmachung des Hinweises auf die Patenterteilung:
**02.10.1996 Patentblatt 1996/40**

(51) Int. Cl.$^6$: **B62D 7/15**, G05D 3/18

(21) Anmeldenummer: **92110167.1**

(22) Anmeldetag: **16.06.1992**

(54) **Elektro-hydraulische Stellvorrichtung, insbesondere für eine Kraftfahrzeug-Hinterachslenkung**

Electro-hydraulic adjusting device, in particular for the rear wheel steering of a motor vehicle

Dispositif électro-hydraulique de positionnement, notamment pour la direction des roues arrières d'un véhicule automobile

(84) Benannte Vertragsstaaten:
**DE FR GB IT**

(43) Veröffentlichungstag der Anmeldung:
**22.12.1993 Patentblatt 1993/51**

(73) Patentinhaber: **SIEMENS AKTIENGESELLSCHAFT**
**80333 München (DE)**

(72) Erfinder:
• **Ulm, Michael, Dr.-Ing.**
  **W-8401 Alteglofsheim (DE)**
• **Lacher, Franz, Dipl.-Ing. (FH)**
  **W-8409 Tegernheim (DE)**

(56) Entgegenhaltungen:
**EP-A- 0 477 413        WO-A-89/10865**
**DE-C- 3 715 593        US-A- 4 770 264**

**Beschreibung**

Die Erfindung betrifft eine elektro-hydraulische Stellvorrichtung nach dem Oberbegriff von Anspruch 1. Solche Stellvorrichtungen werden z.B. in Hinterachslenkungen von Kraftfahrzeugen eingesetzt, können aber auch z.B. in automatischen Kraftfahrzeug-Getrieben verwendet werden.

Die aus der gattungsbildenden bekannte Hinterachslenkung US-A-4 770 264 enthält eine solche Stellvorrichtung, die einen hydraulischen Leistungsteil und einen elektronischen Signalverarbeitungsteil aufweist. Der Leistungsteil enthält ein elektrisch betätigtes Steuerventil, durch das ein Hydraulik-Flüssigkeitsstrom zu einem Stellzylinder geregelt wird, und mehrere elektrische Schaltventile, durch die Flüssigkeitsströme abgesperrt oder durchgelassen werden. Der elektronische Signalverarbeitungsteil enthält ein mikrorechnergesteuertes Steuergerät, durch das Steuersignale für das Steuerventil und das oder die Schaltventile erzeugt werden. Ein elektronisches Steuergerät, dessen Aufgabe es ist, die Lage des Stellzylinder-Kolbens auch dann mit hoher Genauigkeit einzustellen, wenn störende Aufhängungskräfte an der Hinterachse auf das Stellsystem wirken, ist z.B. aus WO-A 89/10 865 bekannt.

Ein Beispiel eines elektrisch betätigten Steuerventils ist ein Proportionalventil, das in Abhängigkeit von einer kontinuierlich veränderlichen Eingangsgröße (z.B. einem elektrischen Strom) eine kontinuierlich sich ändernde Ausgangsgröße (z.B. einen Ölvolumenstrom oder einen Druck) bereitstellt. Die Aufgabe eines Schaltventils besteht darin, einen Ölvolumenstrom entweder ganz zu sperren oder mit möglichst geringen Druckverlusten durchzulassen. Um die elektrischen Eigenschaften eines Schaltventiles zu beschreiben, werden üblicherweise ein Schaltstrom und ein Haltestrom definiert. In der Spule des Schaltmagneten (auch Ventilspule) muß mindestens der Schaltstrom fließen, damit eine tatsächliche Aussteuerung des hydraulischen Betätigungselemente erfolgt. Zum Halten des ausgesteuerten Zustandes muß mindestens der Haltestrom in der Ventilspule fließen.

Einfache Endstufen für Schaltventile weisen üblicherweise nur eine reine JA/NEIN-Funktion (geschaltet/nicht geschaltet) auf. Da die Versorgungsspannung des Schaltventils und die Ventiltemperatur und damit der Ventilwiderstand unmittelbar die Höhe des elektrischen Stromes im Ventil maßgeblich beeinflussen, werden bisher die Ventile und die zugehörigen Leistungsendstufen so ausgelegt, daß bei höchster Betriebstemperatur und bei niedrigster Ventil-Betriebsspannung die jeweiligen Schalt- und Halteströme noch sicher erreicht werden. Diese Auslegung führt dazu, daß in allen anderen Fällen (z.B. niedrigere Betriebstemperatur, höhere Betriebsspannung) der Strom in der Schaltmagnetspule des Ventils höher als erforderlich ist. Dabei wird im Ventil, in der Endstufe und im Steuergerät eine unnötig hohe Verlustleistung erzeugt.

Der Erfindung liegt die Aufgabe zugrunde, die Verlustleistung in elektro-hydraulischen Stellvorrichtungen zu verringern.

Diese Aufgabe wird erfindungsgemäß durch eine Stellvorrichtung nach Anspruch 1 gelöst.

Vorteilhafte Weiterbildungen der Erfindung sind aus den Unteransprüchen ersichtlich.

Ausführungsbeispiele der Erfindung werden im folgenden anhand der Zeichnung erläutert. Es zeigen:

Figur 1     das Gesamtschaltbild des elektrischen und hydraulischen Teils einer erfindungsgemäßen Stellvorrichtung,

Figur 2     eine Endstufe mit Stromregelung für ein Steuerventil und mehrere Schaltendstufen für Schaltventile der Stellvorrichtung nach Figur 1.

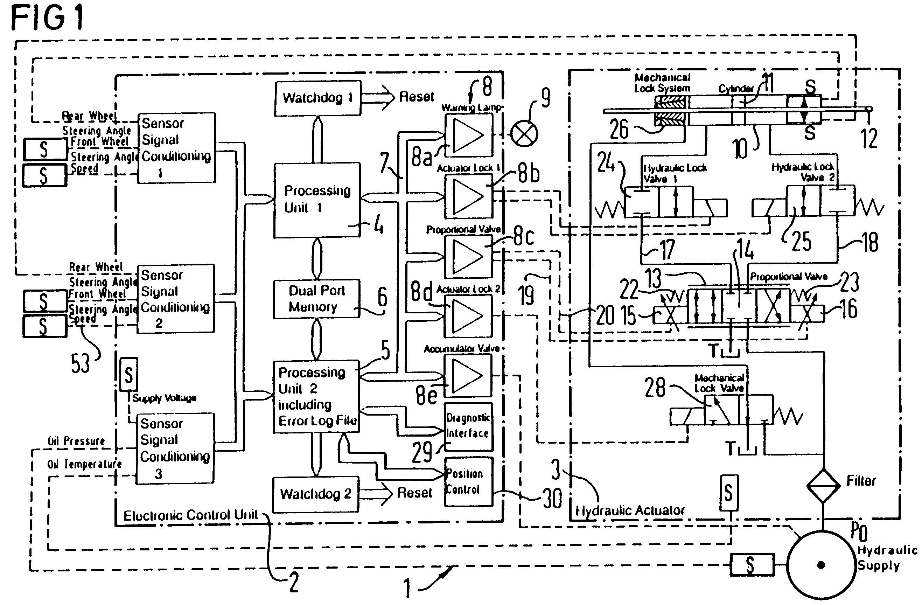

Eine elektro-hydraulische Stellvorrichtung 1 für eine Kraftfahrzeug-Hinterradlenkung enthält - außer den hier nicht dargestellten mechanischen Lenkungsbestandteilen - im wesentlichen ein elektronisches Steuergerät 2 und ein elektro-hydraulischen Leistungsteil 3, mit dem hier die - nicht dargestellten - Hinterräder eines Kraftfahrzeuges gelenkt werden (Figur 1). Solche Stellvorrichtungen 1 können aber auch für andere Stellaufgaben eingesetzt werden.

Die Bestandteile und die Struktur des elektronischen Steuergeräts 2 sind aus Figur 1 ersichtlich. Es wird hier nur soweit erläutert, wie es zum Verständnis der Erfindung erforderlich ist. Im übrigen wird auf die eingangs genannte WO-Veröffentlichung verwiesen. Das Steuergerät 2 enthält aus Sicherheitsgründen ein gedoppeltes Rechnersytem mit einer ersten Recheneinheit 4 und einer zweiten Recheneinheit 5, die durch einen Zwei-Port-Speicher 6 miteinander verbunden sind. Es verarbeitet die Signale von einer Reihe von Sensoren - in der Zeichnung mit S bezeichnet - , die folgende physikalische Größen erfassen: den VorderachsLenkwinkel, die Fahrzeuggeschwindigkeit, den hydraulischen Versorgungsdruck für die Stellvorrichtung, die Temperatur der Hydraulikflüssigkeit (im folgenden auch als Öl bezeichnet), die Auslenkung eines Stellkolbens des elektro-hydraulischen Leistungsteils 3 als Maß für den Hinterachs-Lenkwinkel und die Versorgungsspannung.

Die Recheneinheiten 4 und 5 sind über ein Bussystem 7 mit einer Reihe von Leistungsendstufen 8 verbunden, über die Steuersignale an die einzelnen Bestandteile des Leistungsteils 3, die noch erläutert werden, gelangen. Eine Leistungsendstufe 8a gibt ein Warnsignal ab, das im Fehlerfall eine Warnlampe 9 aufleuchten läßt. Die Funktionen weiterer Endstufen 8b bis 8e wird in Verbindung mit den von ihnen zu steuernden Schaltungsbestandteilen erläutert werden.

Der elektro-hydraulische Leistungsteil 3 weist einen hydraulischen Stellzylinder 10 auf, in dem ein beidseitig mit Druck beaufschlagbarer Stellkolben 11 hin- und herbewegt wird. Es handelt sich um einen sogenannten Gleichgang-

2

zylinder, da die mit Druck beaufschlagten Kolbenflächen auf beiden Seiten gleich groß sind. Eine nach beiden Seiten aus dem Stellzylinder 10 herausragende Kolbenstange 12 ist mit der Hinterradlenkung des Kraftfahrzeugs verbunden. Als hydraulische Verstellkomponente, d.h. als Steuerventil 13 für den hydraulischen Stellzylinder 10, dient ein 4/3-Proportional-Wegeventil, dessen Schieber 14 über zwei Proportional-Elektromagnete 15 und 16 gesteuert wird. Dieses Wegeventil steuert Ölvolumenströme, die über hydraulische Leitungen 17 und 18 dem Stellzylinder 10 zufließen bzw. von ihm abfließen. Der Schieber 14 des Steuerventils 13 kann auch von nur einem Elektromagneten gesteuert werden, wobei auf das andere Ende des Schiebers eine Feder einwirkt.

Der Ölvolumenstrom zu dem Stellzylinder 10 und damit die Größe der Hinterachsverstellgeschwindigkeit wird durch den elektrischen Strom bestimmt, der von dem Steuergerät über die Leistungsendstufe 8c abgegeben wird und über elektrische Leitungen 19, 20 zu den Elektromagneten 15 und 16 fließt. Da das Steuerventil 13 als Proportionalventil ausgeführt ist, ist der Ölvolumenstrom zu dem Stellzylinder 10 kontinuierlich mit dem elektrischen Strom in den Elektromagneten 15 und 16 verstellbar. Im stromlosen Zustand wird der Schieber des Wegeventils 14 durch zwei gegeneinander wirkende Federn 22 und 23 in seine Mittelstellung gedrückt, die dem Wert null der Hinterachslenkgeschwindigkeit, d.h. dem Stillstand der Hinterachslenkung, entspricht.

Der Stellkolben 11 kann, insbesondere in einem Fehlerfall, blockiert werden, und zwar entweder hydraulisch durch zwei in die Leitungen 17, 18 eingefügte, elektromagnetisch betätigte hydraulische Blockierventile 24 und 25, oder mechanisch durch eine Bremse 26, die auf die Kolbenstange 12 wirkt und über ein ebenfalls elektromagnetisch betätigtes Hydraulikventil 28 gesteuert wird. Sowohl die hydraulischen Blockierventile 24, 25 als auch das Hydraulikventil 28 sind als Schaltventile ausgeführt, sie werden von den Leistungsendstufen 8b bzw. 8e gesteuert.

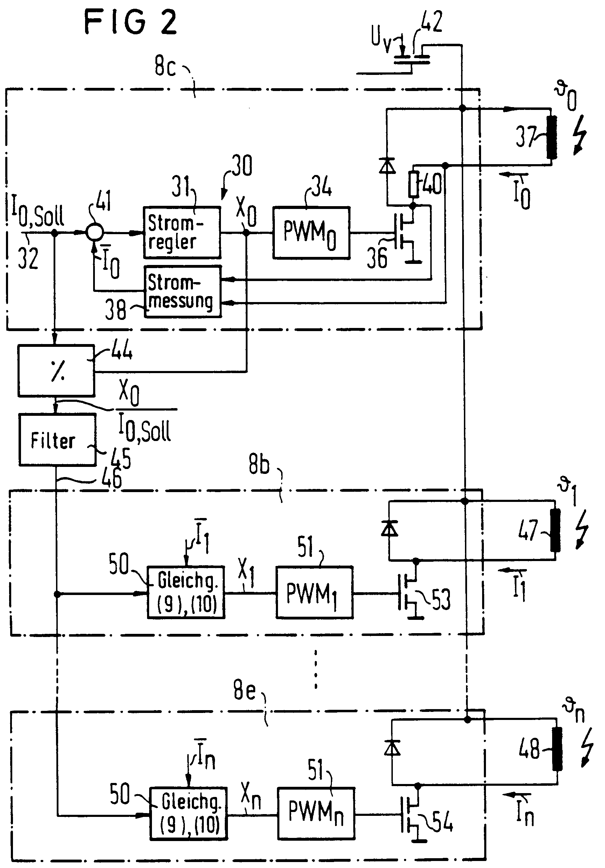

Das Steuergerät 2 enthält außerdem eine Diagnoseschnittstelle 29 und einen hier nur schematisch angedeuteten Lageregelkreis 30 (vergleiche auch Figur 2), der die Auslenkung der Hinterräder exakt regelt. Von einer der Recheneinheiten 4, 5 wird entsprechend einem vorgegebenen Lenkalgorithmus in Abhängigkeit von dem Vorderrad-Lenkwinkel, der Fahrzeuggeschwindigkeit und ggf. weiterer Parameter ein Hinterachs-Lenkwinkel als Sollwert für die Stellkolben-Position oder -Lage über einen Lageregler an den Strom-Regelkreis 30 gegeben.

Die Leistungsendstufe 8c (Figur 2) enthält den Stromregelkreis 30, der der Lageregelung für den hydraulischen Stellzylinder 10 unterlagert ist. Einem Stromregler 31 wird über eine Leitung 32 ein Strom-Sollwert $I_{O, soll}$ zugeführt, der die Geschwindigkeit des Stellkolbens 11 bestimmt.

Das von dem Stromregler 31 abgegebene Stellsignal $x_0$ wird in einem Signalformer 34 in ein pulsweitenmoduliertes Stellsignal umgewandelt, dessen Information in dem veränderlichen Puls-Pause-Verhältnis enthalten ist. Es wird einem Leistungsschalter 36, z.B. einem Feldeffekttransistor, zugeführt, der den Strom durch eine Ventilspule 37 des Steuerventils 13 (vgl. Figur 1) steuert. Aufgrund der Umgebungstemperatur, der im hydraulischen Leistungsteil umgesetzten Verlustleistung und der elektrischen Verlustleistung in der Ventilspule stellt sich eine Temperatur $\vartheta_0$ in der Ventilspule ein.

Der durch die Ventilspule 37 fließende elektrische Strom $I_0$ wird durch eine Strommeßschaltung 38 gemessen, und zwar als Spannungsabfall an einem Meß- oder Shunt-Widerstand 40, der in Reihe zwischen der Ventilspule 37 und dem Leistungsschalter 36 liegt. Der mittlere Ist-Strom $\bar{I}_0$ wird von dem Ausgang der Strommeßschaltung 38 auf den Eingang des Stromreglers 31 rückgeführt, indem er in einer Subtrahierschaltung 41 von dem Strom-Sollwert abgezogen wird.

Die Ventilspule 37 liegt über einen aus Sicherheitsgründen vorgesehenen Redundanzschalter 42 an der Versorgungs- oder Batteriespannung $U_V$.

Das Stellsignal $x_0$ und der mittlere Ist-Strom $\bar{I}_0$ werden in einem Dividierglied 44 dividiert und das Ergebnis wird in einem Filterglied 45 ggf. geglättet. Diese zusätzliche Glättung hat die Aufgabe, die Eigendynamik des Stromreglerkreises 30 für die nachfolgende Verarbeitung zu kompensieren.

Außer der Leistungsendstufe 8c mit Stromregelung enthält das Steuergerät auch eine oder mehrere Leistungsendstufen 8b,...,8e zum Steuern von Schaltventilen - im folgenden auch als Schaltendstufen bezeichnet - , die in den nachfolgenden Formelgrößen und Gleichungen durch den Index i (i = 1,...,n) charakterisiert sind.

In der Stromregelungs-Endstufe 8c (Index 0) wird der mittlere Strom in den Ventilspulen 37 des Steuerventils 13 wie ausgeführt kontinuierlich stromgeregelt. In den Schaltendstufen 8b,...,8e (Index 1 bis n) hingegen wird der mittlere Strom in Ventilspulen 47, 48 der zu schaltenden Ventile (z.B. 24, 25 und 28) durch von den Recheneinheiten 4, 5 gelieferte Signale gesteuert - und nicht stromgeregelt - . Die Schaltendstufen 8b und 8e weisen jeweils eine Steuerschaltung 50 und einen Pulsbreiten- oder Pulsdauermodulator 51 auf.

Das Ausgangssignal 46 des Filtergliedes 45 wird jeweils einem Eingang der Steuerschaltungen 50 zugeführt. An deren anderen Eingang gelangt der mittlere Ist-Strom $\bar{I}_1$ als von der Recheneinheit 4 oder 5 geliefertes Signal. Die beiden Eingangssignale werden in der Steuerschaltung 50 entsprechend den nachfolgend hergeleiteten Gleichungen (9) oder (10) verknüpft. Daraus ergeben sich Steuersignale $x_1,...x_n$, die in den Pulsdauermodulatoren 51 in Signale mit veränderlichem Puls-Pause-Verhältnis umgesetzt werden, mit denen Leistungsschalter 53 und 54 durchgesteuert werden. Entsprechend dem Puls-Pause-Verhältnis fließt dann der Strom durch die Ventilspulen 47 bzw. 48. Auch hier stellen sich aufgrund der Umgebungstemperatur, der im hydraulischen Leistungsteil umgesetzten Verlustleistung und der elektrischen Verlustleistung in der Ventilspule Temperaturen $\vartheta_1$ bzw. $\vartheta_n$ in den Ventilspulen ein.

3

Innerhalb des hydraulischen Leistungsteils 3 sind die verschiedenen Ventile thermisch eng miteinander gekoppelt, d.h. für jedes Ventil j = 0, 1,...,n ergibt sich die Spulentemperatur $\vartheta_j = \vartheta_B + \Delta \vartheta_j$. Dabei bezeichnet $\vartheta_B$ die sog. Blocktemperatur des hydraulischen Leistungsteils und $\Delta\vartheta_j$ die Temperaturdifferenz innerhalb der Spule gegenüber der Blocktemperatur. Die Blocktemperatur ist maßgeblich durch die in der hydraulischen Schaltung entstehenden hydraulischen Verluste und die Wärmeabführungsmöglichkeit des hydraulischen Leistungsteils bestimmt. Die Temperaturdifferenz ist maßgeblich durch die elektrische Verlustleistung im Ventil und die Wärmeleitungsmöglichkeiten zum Block hin bestimmt. Die Forderung einer thermisch engen Kopplung der Ventile untereinander bedeutet, daß der Temperaturanstieg $\Delta\vartheta_j$ (in der Spule gegenüber dem Block) klein gegenüber dem möglichen Schwankungsbereich der Blocktemperatur ist.

Wesentliche Erkenntnis der Erfindung ist, daß das in der Stromregelungs-Endstufe 8c eingeregelte Stellsignal $x_0$ (oder das ihm entsprechende Puls-Pause-Verhältnis) bereits ein Maß für die Störgrößen der Ventilversorgungsspannung und der Ventiltemperatur darstellt. In den Schaltendstufen 8b, 8e ergeben sich prinzipiell die gleichen Abhängigkeiten des sich einstellenden Stromes $I_i$ von dem eingestellten Puls-Pause-Verhältnis $x_i$ (l = 1,...,n). Durch Beziehen des in der Schaltendstufe mit dem Index i einzustellenden Puls-Pause-Verhältnisses $x_i$ auf das sich in der Stromregelungs-Endstufe ergebende Puls-Pause-Verhältnisses $x_0$ heben sich die genannten Störgrößen heraus und sind damit bei der Steuerung nicht mehr zu berücksichtigen. Dies ergibt sich aus der nachfolgenden Herleitung.

Der mittlere Ist-Strom $\bar{I}_0$ im Proportionalventil 13 (Index 0 = null) ist:

$$\bar{I}_0 = c_0 \cdot x_0 \cdot U_v \cdot \frac{1}{R_0 + R_{Sh,0} + R_{s,0}} , \qquad (1)$$

dabei sind:

$U_v$ : Versorgungsspannung
$x_0$ : aktuelles Puls-Pause-Verhältnis
$R_0$ : aktueller Ventilwiderstand
$R_{Sh,0}$ : Widerstand des Shunt-Widerstandes 40
$R_{S,0}$ : Widerstand des "Leistungsschalters" 36
$c_0$ : Proportionalitätsfaktor

Üblicherweise sind $R_{Sh,0}$ und $R_{S,0}$ klein gegenüber $R_0$, damit gilt:

$$\bar{I}_0 \approx c_0 \cdot x_0 \cdot U_v \cdot \frac{1}{R_0} . \qquad (2)$$

Bei gut eingestellten Stromregler sind im stationärem Betrieb Sollwert $\bar{I}_{0,\,soll}$ und Strom-Istwert ungefähr gleich ($\bar{I}_0 \approx I_{0,soll}$):

$$I_{0,soll} \approx c_0 \cdot x_0 \cdot \frac{U_v}{R_0} . \qquad (3)$$

Bei dem Schaltwert i (i = 1,..., n) gilt für den Strom-Istwert $\bar{I}_i$ analog:

$$\bar{I}_i \approx c_i \cdot x_i \cdot \frac{U_v}{R_i} .$$

Aus den Gleichungen (3) und (4) ergibt sich durch Division das zur Einstellung des Stromes $\bar{I}_i$ erforderliche Puls-Pause-Verhältnis $x_i$

Die Ventilwiderstände $R_j$ (j= 0, 1, ... , n) sind von der jeweiligen Spulentemperatur

$$\frac{\bar{I}_i}{I_{0,soll}} \approx \frac{c_i}{c_0} \cdot \frac{x_i}{x_0} \cdot \frac{\cancel{U}_v}{R_i} \frac{R_0}{\cancel{U}_v}$$

$$x_i \approx \frac{c_0}{c_i} \cdot \frac{R_i}{R_0} \cdot x_0 \cdot \frac{\bar{I}_i}{I_{0,soll}} \qquad (5)$$

$\vartheta_j$ abhängig:

$$R_j = R_{j,293} \cdot [1 + \alpha_j (\vartheta_j - 293\ K)] , \tag{6}$$

wobei

$R_{j,293}$ : Ventilwiderstand bei 20° C

$\alpha_j$ : Widerstandbeiwert, üblicherweise für Kupfer $\Rightarrow \alpha_0 = \alpha_1 = \dots = \alpha_n = \alpha$

Die Spulentemperatur erhält man 1t. Voraussetzung aus der Blocktemperatur nach

$$\vartheta_j = \vartheta_B + \Delta\vartheta_j\ ; j = 0, 1, \dots , n \tag{7}$$

Setzt man (7) und (6) in (5) ein und linearisiert mit einem Taylor-Ansatz ergibt sich:

$$x_i \approx \frac{c_0}{c_i} \cdot \frac{R_{i,293}}{R_{0,293}} \cdot x_0 \cdot \frac{\overline{I}_i}{I_{0,soll}} \cdot \quad \dots$$

$$\cdot \left(1 + \frac{\alpha}{1 + \alpha\,(\vartheta_B - 293\ K)} \Delta\vartheta_i - \frac{\alpha}{1 + \alpha\,(\vartheta_B - 293\ K)^2} \cdot \Delta\vartheta_0\right)$$

$$= \quad \frac{c_0}{c_i} \cdot \frac{R_{i,293}}{R_{0,293}} \cdot x_0 \; \frac{\overline{I}_i}{I_{0,soll}} \cdot \quad \dots \qquad (\alpha \text{ ist klein}$$
$$(0,004 \dots c_n))$$

$$\left[1 + \underbrace{\frac{\alpha}{1 + \alpha\,(\vartheta_B - 293\ K)}\left(\Delta\vartheta_i - \frac{1}{1 + \alpha\,(\vartheta_B - 293\ K)}\Delta\vartheta_0\right)}_{\circledast}\right]$$

Die Forderung einer engen termischen Kopplung der Ventile bedeutet, daß

$$\Delta\vartheta_j << |\vartheta_{B,max} - \vartheta_{B,min}| .$$

Damit wird der mit $\circledast$ bezeichnete Ausdruck nahezu Null!

Beispiele: $\Delta\vartheta_i = \Delta\vartheta_0 = 20°$ C

Für $\vartheta_B = -40°$ C wird $\circledast$ : $-0,033$,

für $\vartheta_B = 150°$ C wird $\circledast$ : $+0,018$.

Um ein Halten des Schaltventiles zu gewährleisten, ist am Schaltventil-Treiber ein Puls-Pause-Verhältnis $x_{i,min}$ von

$$x_{i,min} = \left(\frac{c_0}{c_i}\right) \cdot \left(\frac{R_{i,293}}{R_{0,293}}\right) \cdot \frac{x_0}{I_{0,soll}} \cdot \overline{I}_i \tag{9}$$

vorzusehen. Um die während der Herleitung getroffenen Vereinfachungen sowie Bauteilestreuungen bzgl. $R_{i,293} / R_{0,293}$ zu kompensieren, wird man ein geringfügig größeres Puls-Pause-Verhältnis $x_i$ wählen:

$$x_i = (1 + a) \cdot x_{i,min} \text{ oder } x_i = x_{i,min} + b \tag{10}$$

mit $a > 0, b > 0$.

Die Stromregelungs-Endstufe 8c liefert somit eine Referenzinformation über die Störgrößen in Form des - ggf. geglätteten - Quotienten $x_0/I_{0,\text{soll}}$, der an die Schaltendstufen 1 bis n übertragen wird. Es ergeben sich daraus, wie erläutert, die störgrößenunabhängig einzustellenden minimalen Schalt- und Halteströme $I_1,...,I_n$. Abweichungen, die sich insbesondere aus Änderungen der Batteriespannung und der Ventilwiderstände ergeben, werden zuverlässig und ökonomisch berücksichtigt.

Enthält die elektro-hydraulische Stellvorrichtung 1 nicht nur eine Stromregelungs-Endstufe 8c (Index 0), sondern weitere Stromregelungs-Endstufen, so wird zweckmäßigerweise das an der ersten Stromregelungs-Endstufe festgestellte Verhältnis aus $x_0$ und $I_{0,\text{soll}}$ zu einer Störgrößenaufschaltung in dem oder den weiteren Stromregelungs-Endstufen genutzt. Dies hat den Vorteil, daß aufgrund der dann geringeren Reglertätigkeit in den weiteren Endstufen das dynamische Verhalten verbessert wird.

**Patentansprüche**

1. Elektro-hydraulische Stellvorrichtung (1), insbesondere für eine Kraftfahrzeug-Hinterachslenkung, die aufweist:

   - ein elektrisch betätigtes Steuerventil (13), durch das ein Hydraulik-Flüssigkeitsstrom zu einem Stellzylinder (10) gesteuert wird,
   - mindestens ein elektrisch betätigtes Schaltventil (24), durch das ein Hydraulik-Flüssigkeitsstrom gesperrt oder durchgelassen wird, und
   - ein Steuergerät (2), durch das Steuersignale für das Steuerventil und das Schaltventil erzeugt werden, **dadurch gekennzeichnet,**
   - daß der mittlere Strom des Steuerventils (13) durch einen Regelkreis (30) mit pulsweitenmoduliertem Stellsignal (x0) geregelt wird,
   - daß der mittlere Strom des Schaltventils (23) mit einem pulsweitenmodulierten Steuersignal (x1) gesteuert wird,
   - daß an dem Schaltventil und an dem Steuerventil die gleiche Versorgungsspannung (UV) anliegt, und
   - daß das Puls-Pausen-Verhältnis des Steuersignals für das Schaltventil auf das Puls-Pausen-Verhältnis des Stellsignals für das Steuerventil bezogen wird.

2. Stellvorrichtung nach Anspruch 1, dadurch gekennzeichnet, daß das sich in dem Regelkreis einstellende Puls-Pause-Verhältnis (x0) und der jeweilige Strom-Sollwert (I0,soll) des Regelkreises (30) auf ein Dividierglied (44) gegeben und daß der sich ergebende Quotient als Referenzinformation (46) auf die Steuerschaltung (50) für das Schaltventil (8b, 8e) gegeben wird.

3. Stellvorrichtung nach Anspruch 2, dadurch gekennzeichnet, daß der Quotient in einem Filterglied (45) geglättet wird.

4. Stellvorrichtung nach Anspruch 1, dadurch gekennzeichnet, daß sie mehrere jeweils von einem Strom-Regelkreis (30) geregelte Steuerventile aufweist und daß der in einem Regelkreis ermittelte Quotient aus sich einstellendem Puls-Pause-Verhältnis ($X_0$) und dem jeweiligen Strom-Sollwert ($I_{0,\text{soll}}$) für eine Störgrößenaufschaltung in dem oder den anderen Regelkreisen verwendet wird.

**Claims**

1. Electro-hydraulic adjusting device (1), preferably for the rear wheel steering system of a motor vehicle, which rear wheel steering system has:

   - an electrically actuated control valve (13) by means of which a stream of hydraulic fluid to an adjusting cylinder (10) is controlled,
   - at least one electrically actuated on-off valve (24) by means of which a stream of hydraulic fluid is blocked or let through, and
   - a control unit (2) by means of which control signals for the control valve and the on-off valve are produced, characterized

   - in that the average flow of the control valve (13) is regulated by means of a regulating circuit (30) with pulse-width-modulated adjustment signal (x0),
   - in that the average flow of the on-off valve (23) is controlled with a pulse-width-modulated control signal (x1),
   - in that the same supply voltage (UV) is present at the on-off valve and at the control valve, and

6

-   in that the mark-to-space ratio of the control signal for the on-off valve is related to the mark-to-space ratio of the adjustment signal for the control valve.

2. Adjusting device according to Claim 1, characterized in that the mark-to-space ratio (x0) which is to be set in the regulating circuit and the respective desired current value ($I_{0,des}$) of the regulating circuit (30) is transmitted to a dividing element (44), and in that the resulting quotient is transmitted as reference information (46) to the control circuit (50) for the on-off valve (8b, 8e).

3. Adjusting device according to Claim 2, characterized in that the quotient is smoothed in a filter element (45).

4. Adjusting device according to Claim 1, characterized in that the said adjusting device has a plurality of control valves which are each regulated by a current regulating circuit (30), and in that the quotient formed from the mark-to-space ratio ($X_0$) which is set and the respective desired current value ($I_{0,des}$), which quotient is determined in a regulating circuit, is used for feed-forward control in the other regulating circuit or circuits.

**Revendications**

1. Dispositif de réglage électro-hydraulique (1), notamment pour une direction de l'essieu arrière d'un véhicule automobile, qui comprend :

   -   une soupape de commande actionnée électriquement (13), qui commande un courant de liquide hydraulique en direction d'un vérin de réglage (10),
   -   au moins une soupape de commutation actionnée électriquement (26), au moyen de laquelle le courant de liquide hydraulique est bloqué ou libéré,
   -   un appareil de commande (2), au moyen duquel des signaux de commande pour la soupape de commande et la soupape de commutation sont produits,
   caractérisé en ce

   -   que le courant moyen de la soupape de commande (13) est réglé par un circuit de régulation (3) à l'aide d'un signal de réglage ($x_0$) modulé selon une modulation de durée d'impulsions,
   -   que le courant moyen de la soupape de commutation (23) est commandé par un signal de commande ($x_1$) modulé selon une modulation de durée d'impulsions,
   -   que la même tension d'alimentation ($U_V$) est appliquée à la soupape de commutation et à la soupape de commande, et que le rapport de tout ou rien du signal de commande pour la soupape de commutation est rapporté au rapport de tout ou rien du signal de réglage pour la soupape de commande.

2. Dispositif de réglage selon la revendication 1, caractérisé en ce que le rapport de tout ou rien ($x_0$) réglé dans le circuit de réglage, et la valeur de consigne respective du courant ($I_{0,soll}$) du circuit de régulation (3) sont appliqués à un circuit diviseur (44), et que le quotient obtenu est délivré en tant qu'information de référence (46) au circuit de commande (50) de la soupape de commutation (8b, 8e).

3. Dispositif de réglage selon la revendication 2, caractérisé en ce que le quotient est lissé dans un circuit de filtrage (45).

4. Dispositif de réglage selon la revendication 1, caractérisé en ce qu'il comporte plusieurs soupapes de commande réglées respectivement par un circuit de régulation de courant (30), et que le quotient, déterminé dans un circuit de régulation, du rapport de tout ou rien ($X_0$), qui s'établit, et la valeur de consigne respective du courant ($I_{0,soll}$) pour un circuit d'immixtion d'une grandeur parasite est utilisé dans le ou les autres circuits de régulation.

FIG 1

# FIG 2